**Europäisches Patentamt**

**European Patent Office**

**Office européen des brevets**

(19)

(11) Veröffentlichungsnummer : **0 412 974 B1**

## (12) EUROPÄISCHE PATENTSCHRIFT

(45) Veröffentlichungstag der Patentschrift :
**09.09.92 Patentblatt 92/37**

(51) Int. Cl.$^5$ : **G01B 7/14,** G01B 7/08,
G01D 5/24

(21) Anmeldenummer : **89904497.8**

(22) Anmeldetag : **17.04.89**

(86) Internationale Anmeldenummer :
**PCT/AT89/00037**

(87) Internationale Veröffentlichungsnummer :
**WO 89/10533 02.11.89 Gazette 89/26**

(54) EINRICHTUNG ZUR MESSUNG MINDESTENS EINES ABSTANDES ZWISCHEN RELATIV
ZUEINANDER BEWEGTEN ELEMENTEN.

(30) Priorität : **18.04.88 AT 986/88**

(43) Veröffentlichungstag der Anmeldung :
**20.02.91 Patentblatt 91/08**

(45) Bekanntmachung des Hinweises auf die
Patenterteilung :
**09.09.92 Patentblatt 92/37**

(84) Benannte Vertragsstaaten :
**AT CH DE FR GB LI NL SE**

(56) Entgegenhaltungen :
**EP-A- 0 021 524
EP-A- 0 060 588
EP-A- 0 068 568
DE-A- 1 548 568
GB-A- 2 026 703
US-A- 3 303 701
US-A- 4 242 666**

(73) Patentinhaber : **FRANEK, Friedrich
Ertlstrasse 11
A-3100 St. Pölten (AT)**
Patentinhaber : **ABRAHAM, Gerhard
Sechsschimmelgasse 12/17
A-1090 Wien (AT)**

(72) Erfinder : **FRANEK, Friedrich
Ertlstrasse 11
A-3100 St. Pölten (AT)**
Erfinder : **ABRAHAM, Gerhard
Sechsschimmelgasse 12/17
A-1090 Wien (AT)**

(74) Vertreter : **Gibler, Ferdinand, Dipl.Ing. Dr.
techn.
Dorotheergasse 7/14
A-1010 Wien (AT)**

EP 0 412 974 B1

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

EP 0 412 974 B1

## Beschreibung

Die Erfindung bezieht sich auf eine Einrichtung zur Messung eines gegebenenfalls von einem Film eines im wesentlichen flüssigen oder pastösen Mediums, z.B. eines Filmes aus Schmierstoff, Pasten, Wasser od. dgl., erfüllten Abstandes zwischen einem ruhenden und einem gegenüber diesem bewegten Element, wie z.B. zwischen Lagerschale(n) und Welle, bei der eine das den zu überwachenden Abstand erfüllende Medium mit einem elektrischen Signal beaufschlagende und dessen die Meßimpedanz bildende Impedanz erfassende Auswerteschaltung vorgesehen ist, wobei die den Abstand begrenzenden Teile elektrisch leitfähig oder mit elektrisch leitenden Kontakten versehen sind.

Solche Einrichtungen wurden z.B. durch die GB-PS 2 071 852 oder die GB-PS 2 026 703 u.a. bekannt. Bei allen bekannten Einrichtungen sind die beiden durch einen Film getrennten oder in einem Abstand voneinander gehaltenen Teile stets galvanisch mit einer Auswerteschaltung verbunden. Da es sich dabei meist um drehende Teile handelt, ergeben sich durch die galvanische Verbindung entsprechende Fehlerquellen, die zu Fehlmessungen bzw. zu Verfälschungen der Meßergebnisse führen können.

Insbesondere bei geschmierten Hochleistungsmaschinenelementen (z.B. Turbinengleitlager) ist es für eine zuverlässige Funktionserfüllung und lange Lebensdauer notwendig, die erforderliche Schmierspaltdicke sicherzustellen. Im allgemeinen soll ein hydrodynamischer Schmierungszustand erreicht werden. Nur für einfache Massiv-Gleitlager ist es vergleichsweise einfach, Berechnungsparameter für hydrodynamische Schmierung zu ermitteln. Es gibt zwar auch einige Näherungsmethoden zur Berechnung für andere Elemente wie z.B. Sinterlager, hier sind jedoch in jedem Falle experimentelle Analysen erforderlich, um Daten über den Schmierungszustand des Systems im praktischen Betrieb zu erhalten. Üblicherweise werden Reibungskräfte gemessen als Funktion der Belastung oder der Gleitgeschwindigkeit. Als Ergebnis erhält man z.B. Stribeck-Kurven, aus welchen der Punkt minimaler Reibung sowie der Übergang von Mischreibung zu hydrodynamischer Schmierung ersichtlich sind.

In vielen Fällen ist es jedoch wünschenswert, Aussagen über die tatsächliche Schmierspaltdicke zu erhalten, da zahlreiche unbekannte Faktoren wie z.B. thermische Ausdehnungen und Deformationen zu berücksichtigen sind. Es wurden bereits zahlreiche Meßverfahren entwickelt und erprobt.

Bei einigen davon ist aber zu beachten, daß mit diesen nur ein Punkt des Schmierspaltes überwacht werden kann, sodaß es nicht wirklich möglich ist, die generellen Schmierungsbedingungen unter Berücksichtigung von Formabweichungen der Welle und deren Deformationen im Betrieb zu ermitteln.

Im Prinzip ist es möglich, die relativen Positionsveränderungen von geschmierten Teilen, die durch den Schmierspalt verursacht werden, mit Hilfe bekannter Wegmeßmethoden zu ermitteln. Dafür kommen alle bekannten Systeme in Frage, wobei besonders berührungslose Systeme, wie optische oder induktiv bzw. kapazitiv arbeitende Sensoren sich für vorliegenden Anwendungsfall anbieten. Allerdings weisen diese herkömmlichen Meßmethoden geringe Genauigkeit und Reproduzierbarkeit auf, da die zu messenden Abstände im Bereich von wenigen Mikrometern liegen und eine Menge von Einflußparametern (z.B. Deformationen) zu berücksichtigen sind.

Optische Meßmethoden können angewandt werden bei Einsatz mindestens eines transparenten Teiles, was jedoch mit einer Einschränkung der Werkstoffwahl verbunden ist. Es sind Methoden bekannt, welche mit Röntgenstrahlen arbeiten. Schwierigkeiten ergeben sich hier aus dem komplizierten Apparateaufbau und der Notwendigkeit der sehr exakten Justierung.

Zahlreiche andere Methoden erfassen elektrische Parameter des Schmierfilms (ohmscher Widerstand, Kapazität, Impedanz). Aus diesen Parametern können Aussagen über die Schmierfilmdicke abgeleitet werden. Im allgemeinen führen einfache Widerstandsmessungen des Ölfilms nicht zum gewünschten Ziel, da der Widerstandscharakter des Schmierstoffes sich sehr stark als Funktion der Feuchtigkeit, des Drucks, der Temperatur und der angelegten elektrischen Feldstärke verändert. Trotzdem können Widerstandsmessungen sinnvoll sein, um z.B. das Abreißen des Schmierfilms wegen zu geringer thermischer Stabilität des Schmierstoffes festzustellen. Es ist außerdem möglich, die Frequenz und Dauer von kritischen Betriebszuständen bei direktem Kontakt zwischen den Gleitpartnern festzustellen. Kapazitäts- bzw. Impedanzmessungen eignen sich besser als Widerstandsmessungen zur Erfassung der Schmierfilmdicke. Zahlreiche Forschungsarbeiten beschäftigen sich mit der Interpretation der Schmierfilmkapazität in geschmierten Systemen. Sowohl direkte Strom-Spannungs-Messung als auch Trägerfrequenzmethoden sind bekannt. Allen diesen Methoden gemeinsam ist die Notwendigkeit einer galvanischen Verbindung zwischen stationärem und rotierendem Teil des tribologischen Systemes. Diese wird bei den bekannten Methoden z.B. durch Schleifring- oder Quecksilberübertrager hergestellt. Daraus ergeben sich zahlreiche Einschränkungen für die Anwendung.

Ziel der Erfindung ist es, diese Nachteile zu vermeiden und eine Einrichtung der eingangs erwähnten Art vorzuschlagen, die sich mit geringsten Änderungen an bereits bestehenden Maschinen anbringen läßt.

Erfindungsgemäß wird dies dadurch erreicht, daß das zwischen den beiden Elementen befindliche Me-

2

EP 0 412 974 B1

dium, bzw. der zwischen diesen vorhandene Film zu mindestens einer weiteren eine berührungslose Signalübertragung zwischen dem bewegten und ruhenden Element ermöglichenden Koppelimpedanz oder einer weiteren, durch die Impedanz eines einen weiteren zu überwachenden Abstand erfüllenden Medium gebildeten Meßimpedanz, die ihrerseits mit der Auswerteschaltung elektrisch verbunden ist, elektrisch in Serie geschaltet ist, wobei über das bewegte Element oder den darauf befindlichen elektrisch leitenden Kontakt die elektrische Verbindung zwischen der Meßimpedanz und der Koppelimpedanz oder zwischen den Meßimpedanzen hergestellt ist.

Auf diese Weise kann auf die bisher erforderliche direkte Kontaktierung von durch den zu untersuchenden Schmierfilm getrennten Maschinenteilen verzichtet werden. So ist keine galvanische Verbindung zwischen der Auswerteschaltung und bewegten Teilen erforderlich, wodurch die bisherigen Einschränkungen entfallen.

Besonders günstig ist es, wenn die Koppelimpedanz durch eine zur Meßimpedanz in Serie geschaltete Kapazität gebildet ist, wobei an einem der durch den Schmierfilm getrennten Teile ein Wechselspannungssignal anliegt und der andere mit einer Elektrode des die Koppelimpedanz bildenden Kondensators mechanisch und elektrisch verbunden ist, dessen andere Elektrode mit der Auswerteschaltung verbunden ist.

Auf diese Weise läßt sich sehr einfach die erforderliche Kopplung sicherstellen, wobei nur sehr geringe konstruktive Änderungen an einer bereits vorhandenen Maschine vorgenommen werden müssen. So kann z.B. ein an der Welle einer zu untersuchenden oder zu überwachenden Maschine angeordnetes Lüfterrad, sofern es nicht ohnehin aus Metall hergestellt ist, mit einer dünnen Metallauflage an der einem Gehäuseteil der Maschine gegenüberliegenden Seite versehen und diese Metallauflage elektrisch leitend mit der Welle derselben verbunden werden. An der beschichteten Seite des Lüfterrades kann das Gehäuse mit einer einseitig mit einer elektrisch leitenden Auflage versehenen isolierenden Kunststoffolie versehen und deren leitende Schichte kontaktiert und mit der Auswerteschaltung verbunden werden. Der zweite Anschluß der Auswerteschaltung kann mit dem elektrisch leitenden Gehäuse der zu überwachenden Maschine verbunden werden. In diesem Falle erhält man eine im wesentlichen gemittelte Aussage über den Zustand der Schmierfilme der Lager der Maschine. Soll dagegen der Zustand des Schmierfilmes eines einzelnen Lagers erfaßt werden, so muß dieses vom Gehäuse elektrisch isoliert werden, was sich durch den Einbau entsprechender Isolierzwischenlagen, z.B. aus Kunststoff oder aus einer elektrisch isolierenden Keramik leicht bewerkstelligen läßt.

Grundsätzlich ist es aber auch möglich, eine induktive Kopplung vorzusehen, die auch parallel zur Schmierspaltkapazität geschaltet werden kann, sodaß sich ein Parallelschwingkreis ergibt, doch wird es in einem solchen Falle meist notwendig sein, größere konstruktive Eingriffe an der zu überwachenden Maschine vorzunehmen. Anderseits dürfte sich in einem solchen Falle mit einer relativ einfachen Auswerteschaltung ein sehr gutes Auflösverhältnis auch bei einfachstem Aufbau der Auswerteschaltung erreichen lassen.

Aus meßtechnischen Gründen ist es vorteilhaft, wenn der die Koppelimpedanz bildende Kondensator eine Kapazität aufweist, deren Größe im Bereich jener der Schmierspaltkapazität liegt.

Dabei ist es weiters zweckmäßig, wenn die Meß- und Koppelimpedanz mit hochfrequenten Signalen vorzugsweise im Bereich von 1 bis 30MHz beaufschlagt sind.

Auf diese Weise ergeben sich trotz der sehr kleinen Schmierspaltkapazitäten meßtechnisch leicht handhabbare Signale, wodurch sich der Aufwand für Verstärker entsprechend verringert.

Nach einem weiteren Merkmal der Erfindung kann vorgesehen sein, daß die Meß- und die Koppelimpedanz im frequenzbestimmenden Kreis eines Meßoszillators geschaltet sind, der Teil der Auswerteschaltung ist, die weiters noch einen Frequenzmeßkreis umfaßt, wodurch sich ein relativ einfacher Aufbau der Auswerteschaltung ergibt, die weiters im wesentlichen nur mehr einen Frequenzmeßkreis aufweisen muß.

Um die Genauigkeit der Auswerteschaltung zu erhöhen, bzw. diese unempfindlicher gegen Temperaturschwankungen zu machen, kann vorgesehen sein, daß die Auswerteschaltung weiters einen Referenz-Oszillator der gleichen Bauart wie der Meßoszillator aufweist, in dessen frequenzbestimmenden Kreis Störeinflüsse erfassende Fühler, z.B. Temperaturfühler, angeordnet sind, oder der mit dem Meßoszillator thermisch gekoppelt ist, wobei die Ausgänge dieses Referenz-Oszillators und des Meßoszillators mit einer Korrekturschaltung verbunden sind.

In diesem Zusammenhang kann nach einem weiteren Merkmal der Erfindung vorgesehen sein, daß der Frequenzmeßkreis der Auswerteschaltung einen mit einem bestimmten Zählerstand ladbaren Zähler aufweist, der über eine, vorzugsweise vom Referenz-Oszillator gesteuerte Torschaltung mit den Signalen des Meßoszillators beaufschlagbar ist und der Zähler mit einem von der Torschaltung gesteuerten Speicher verbunden ist, der zu vorgegebenen Zeitpunkten den Zählerstand übernimmt, der ein Maß für den Zustand des Schmierfilmes ist, wobei die vom Referenz-Oszillator gesteuerte Torschaltung in Verbindung mit dem von dem Meßoszillator getakteten Zähler die Korrekturschaltung bilden.

Durch diese Maßnahmen ergibt sich eine sehr einfach aufgebaute Auswerteschaltung, bei der mit einfachsten Mitteln eine sehr gute Temperaturkompensation erreicht werden kann, wobei es möglich ist die Auflösung und die Geschwindigkeit der Schaltung sehr variabel zu gestalten ohne in den grundsätzlichen Aufbau der

3

EP 0 412 974 B1

Schaltung eingreifen zu müssen. So ist es durch Wahl einer entsprechend kurzen Torzeit und einer entsprechend hohen Frequenz der die Schmierspaltkapazität beaufschlagenden Signale möglich, auch Änderungen des Schmierfilmes bei jeder Umdrehung der Welle in dem zu überwachenden Lager zu erfassen.

Bei einer solchen Auswerteschaltung kann weiters vorgesehen sein, daß der Zähler als Abwärtszähler ausgebildet ist und bei Erreichen des Zählerstandes Null an einem mit dem Zähleingang eines Aufwärtszählers verbundenen Ausgang ein Signal abgibt, wobei der Ausgang des Aufwärtszählers mit dem Setzeingang und die Torschaltung mit einem ein Setzen des Abwärtszählers ermöglichenden Ladeeingang desselben verbunden ist.

Auf diese Weise ist sichergestellt, daß der Abwärtszähler nach einer entsprechenden Einlaufzeit der Auswerteschaltung mit einer den entsprechenden Verhältnissen angepaßten Zählerstand in jedem Meßzyklus gesetzt wird. Außerdem kann auf diese Weise jede Änderung des Schmierspaltes mit hoher Auflösung erfaßt werden, da das Ausgangssignal einer solchen Auswerteschaltung praktisch ein Maß für die Änderung des Schmierspaltes darstellt.

In diesem Zusammenhang kann weiters vorgesehen sein, daß der Ausgang des dem Abwärtszähler nachgeschalteten Speichers mit dem Setzeingang eines weiteren, als Spitzenwertspeicher dienenden Speichers und einem Komperator, dessen zweiter Eingang mit dem Ausgang des Spitzenwertspeichers verbunden ist, wobei der Ausgang des Komperators mit dem Ladeeingang des Spitzenwertspeichers verbunden ist und einen Ladeimpuls abgibt, wenn der Zählerstand des Spitzenwertspeichers unter jenem des diesem vorgeschalteten Speichers liegt.

Dies ermöglicht es auf besonders einfache Weise den momentanen Zustand des Schmierfilmes mit einem vorgegebenen Zustand zu vergleichen.

So kann die zu überwachende Maschine z.B. im optimal geschmierten Zustand mit ihrer optimalen Drehzahl betrieben werden, wodurch sich in den Lagern der gleichmäßigste und daher größte Schmierspalt ergibt und daher deren Kapazität am kleinsten ist. Dies bewirkt aber, daß der Meßoszillator mit seiner höchsten Frequenz schwingt und daher der Abwärtszähler entsprechend rasch zählt und daher ein Überlaufsignal abgibt, wodurch sich der Aufwärtszähler hinaufzählt und beim nächsten Zyklus der Abwärtszähler mit einem erhöhten Betrag gesetzt wird. Auf diese Weise ergibt sich, daß der Abwärtszähler bei optimalen Lagerbedingungen mit dem höchsten Wert gesetzt wird und daher bei weniger optimalen Bedingungen, bei denen der Schmierspalt entsprechend kleiner und daher die Schmierspaltkapazität entsprechend größer ist, was zu einer Verminderung der Frequenz des Meßoszillators führt, am Ende der Torzeit ein Restzählerstand im Abwärtszähler verbleibt.

Anderseits kann der im Abwärtszähler bei jedem Meßzyklus verbleibende Wert erfaßt und im Spitzenwertspeicher gespeichert werden. Ein Vergleich des im Normalbetrieb der Maschine erfaßten Wertes mit den beiden zuvor erreichten Extremwerten zeigt den Belastungsgrad des Lagers.

Dabei kann weiters vorgesehen sein, daß die Ausgänge der beiden Speicher mit einem als Normierschaltung dienenden Dividierer, gegebenenfalls unter Zwischenschaltung von Digital/Analogwandlern verbunden sind, wodurch das Belastungsverhältnis des überwachten Lagers auf einfache Weise erfaßt werden kann.

Nach einem weiteren Merkmal der Erfindung kann vorgesehen sein, daß zumindest der Abwärtszähler geteilt ausgebildet ist, wobei der Ausgang der geringstwertigen Bits mit dem von der Torschaltung gesteuerten Speicher und der Ausgang der höchstwertigen Bits mit einer Überlaufanzeige und gegebenenfalls einem der Torschaltung vorgeschalteten Frequenzteiler mit einstellbarem Teilungsverhältnis verbunden ist.

Dies ermöglicht eine Anzeige und gegebenenfalls auch Korrektur, wenn das Verhältnis der Torzeit zur Meßfrequenz und dem Setzwert des Abwärtszählers nicht übereinstimmen. Dies kann z.B. auftreten, wenn die Einrichtung an einem Lagerprüfstand eingesetzt wird und eine andere Lagertype gemessen wird, ohne vorher den Setzwert entsprechend zu ändern.

Eine andere Art einer Auswerteschaltung zeichnet sich dadurch aus, daß die Auswerteschaltung neben dem Meßoszillator einen Taktoszillator aufweist, dessen Ausgang mit dem Takteingang eines Zählers, vorzugsweise eines Abwärtszählers, über eine von den Ausgangssignalen des Meßoszillators gesteuerte Freigabeschaltung verbindbar ist, die auch die Ladung des Zählers mit einem vorbestimmten Wert steuert und eine einen bestimmten Zählerstand des Zählers mit dem Eintreffen einer bestimmten Anzahl von Signalen des Meßoszillators vergleichende Schaltung vorgesehen ist.

Bei dieser Ausführungsform wird praktisch die Zeit, in der eine bestimmte Anzahl von Signalen des Meßoszillators einlangt, erfaßt. Auch dabei ist es durch entsprechende Wahl der Anzahl der einlangenden Signale und Wahl der Taktfrequenz möglich, die Auflösung und die Auswertegeschwindigkeit zu variieren und so eine Anpassung an das Meßerfordernis vorzunehmen.

Weiters kann vorgesehen sein, daß der Ausgang des Zählers, gegebenenfalls unter Zwischenschaltung eines Flip-Flops mit dem Steuereingang eines an einem festen Potential angeschlossenen Schalters, an dem ein Integrierglied angeschlossen ist, verbunden ist und ein weiterer, an einem zweiten unterschiedlichen Po-

4

tential angeschlossener Schalter vorgesehen ist, an dem das selbe Integrierglied über einen Widerstand angeschlossen ist, der gleich dem Widerstand des Integriergliedes ist, wobei dieser Schalter von den Ausgangssignalen des Meßoszillators gesteuert ist, wobei zur Überwachung des Eintreffens einer bestimmten Anzahl von Signalen des Meßoszillators vorzugsweise ein Frequenzteiler vorgesehen ist.

Auf diese Weise heben die Einflüsse der beiden Potentiale auf das Integrierglied einander solange auf, solange beide Schalter durchgeschaltet sind. Je nach dem, ob zuerst ein bestimmter, eine Sperre des entsprechenden Schalters bewirkender Zählerstand oder das Ende der durch die festgelegte Anzahl von Signalen des Meßoszillators bestimmte Torzeit erreicht wird, bei dem es ebenfalls zu einer Änderung des Schaltzustandes des entsprechenden Schalters kommt, kommt es auch zu einer entsprechenden Beeinflussung des Integriergliedes in Richtung des einen oder des anderen Potentiales, je nach dem welches länger an diesem ansteht. Diese Änderung kann aber leicht z.B. mit Hilfe eines Differenzverstärkers, an dessen einem Eingang eine entsprechende Referenzspannung anliegt, ausgewertet werden.

Bei einem bevorzugten Ausführungsbeispiel einer solchen Auswerteschaltung kann weiters vorgesehen sein, daß eine Kalibrierschaltung vorgesehen ist, die durch einen mit seinem Takteingang mit dem Taktgenerator verbundenen Zähler, vorzugsweise einem Aufwärtszähler verbindbar ist und einem diesen nachgeschalteten Speicher gebildet ist, dessen Ausgang mit dem Setzeingang des von der Freigabeschaltung gesteuerten Zählers verbunden ist, wobei eine von einem Schalter und den Signalen des Meßoszillators gesteuerte Synchronisierschaltung vorgesehen ist, die den Taktoszillator für eine bestimmte Zeit zum Zähler der Kalibrierschaltung durchschaltet und dessen Zählerstand nach dieser Zeit in den Speicher einliest.

Damit ist es möglich, eine Kalibrierung in dem Sinne vorzunehmen, daß die zu überwachende Maschine unter optimalen Bedingungen, bei denen sich der größte Schmierspalt ergibt, laufen gelassen und die Kalibrierschaltung mittels des Schalters aktiviert wird. Dabei wird die Zeit, während der der Taktgenerator zum Zähler der Kalibrierschaltung durchgeschaltet wird, vorzugsweise durch die Zeit, während der eine bestimmte Anzahl von Signalen des Meßoszillators einlangt bestimmt, welche Anzahl z.B. mittels eines Frequenzteilers festgelegt werden kann. Dadurch wird ein entsprechender Zählerstand in den Speicher der Kalibrierschaltung eingeschrieben, der auch nach Beendigung der Kalibrierung bei jedem Meßzyklus in den Zähler eingeschrieben wird, der zweckmäßigerweise als Abwärtszähler ausgebildet ist.

Nach einem weiteren Merkmal der Erfindung kann vorgesehen sein, daß die Koppelimpedanz mit einem konstante Frequenz liefernden Oszillator über eine definierte Impedanz in Verbindung steht und der Eingangskreis der Auswerteschaltung eine definierte Impedanz aufweist, die vorzugsweise parallel zur Koppel- und Meßimpedanz geschaltet ist, welche Auswerteschaltung im wesentlichen durch einen Meßgleichrichter gebildet ist, dem gegebenenfalls ein Bandpaßfilter vorgeschaltet ist.

In einem solchen Falle ergibt sich ein besonders einfacher Aufbau der Auswerteschaltung, soferne an die Meßgenauigkeit keine besonders hohen Anforderungen gestellt werden, da in diesem Falle der Aufwand der bei der Auslegung des Meßgleichrichters zur Kompensation von Umwelteinflüssen und Bauteiltoleranzen getrieben werden müßte sehr hoch wird. Diese Ausführungsform eignet sich daher vorwiegend für Einrichtungen zur Festlegung von Wartungsintervallen bzw. zur Anzeige, daß eine Wartung erforderlich ist.

Die Erfindung wird nun anhand der Zeichnung näher erläutert. Dabei zeigen:

Fig. 1 ein Prinzipschaltbild einer ersten Ausführungsform einer erfindungsgemäßen Einrichtung,

Fig. 2 ein Prinzipschaltbild einer zweiten Ausführungsform einer erfindungsgemäßen Einrichtung,

Fig. 3 eine Variante der Ausführungsform nach der Fig. 1,

Fig. 4 eine Auswerteschaltung für eine Einrichtung nach Fig. 1 oder 3,

Fig. 5 eine weitere Auswerteschaltung für eine Einrichtung nach Fig. 1 oder 3,

Fig. 6 bis 9 schematische Beispiele für die Anbringung einer Einkopplungsimpedanz an Motoren.

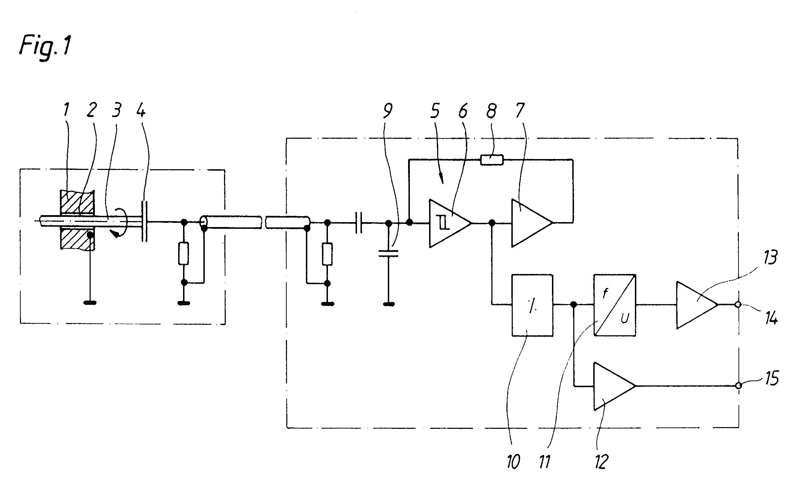

Bei der Einrichtung nach der Fig. 1 ist die Lagerschale 1 elektrisch isoliert gehalten und elektrisch leitend mit Masse verbunden. An der von der Lagerschale 1 durch den Schmierfilm 2 getrennten Welle 3 ist eine Elektrode eines als Koppelimpedanz dienenden Koppelkondensators 4 angebracht und mit der Welle elektrisch leitend verbunden. Die zweite Elektrode des Koppelkondensators 4 kann an dem Gehäuse der zu überwachenden Maschine in entsprechender Nähe der an der Welle angeordneten Elektrode angebracht sein. Diese zweite Elektrode ist, wie aus der Fig. 1 ersichtlich, über eine geschirmte Leitung mit einem Meßoszillator 5 verbunden.

Dieser ist im wesentlichen durch einen Schmitt-Trigger 6 und einem diesen nachgeschalteten Verstärker 7 gebildet, in dessen Rückkopplungskreis ein Widerstand 8 geschaltet ist. Der Eingang des Schmitt-Triggers 6 ist mit einer R/C Kombination beschaltet und über einen Kondensator 9 mit Masse verbunden.

Damit ist bei diesem Schmitt-Trigger-Oszillator der Koppelkondensator 4 und die mit dieser in Reihe geschaltete Kapazität des Schmierfilmes bzw. des Schmierspaltes 2 im frequenzbestimmenden Kreis desselben geschaltet, sodaß sich Änderungen im Schmierspalt 2, die zwangsläufig auch Änderungen dessen Kapazität bewirken, auf die Schwingfrequenz des Meßoszillators 5 auswirken.

Bei dem dargestellten Ausführungsbeispiel ist dem Schmitt-Trigger-Oszillator 6 bis 9 ein Frequenzteiler 10 nachgeschaltet, der jedoch nicht unbedingt erforderlich ist. Desgleichen sind der diesem nachgeschaltete Frequenz/Spannungswandler 11 und die Ausgangsverstärker 12, 13 nicht unbedingt erforderlich.

Der Spannungsausgang 14 liefert bereits ein dem Schmierfilm entsprechendes Signal.

Für eine genauere Auswertung ist es jedoch zweckmäßig das am Frequenzausgang 15 anstehende Signal in einer weiteren Auswerteschaltung zu verwerten, die noch später erläutert werden wird.

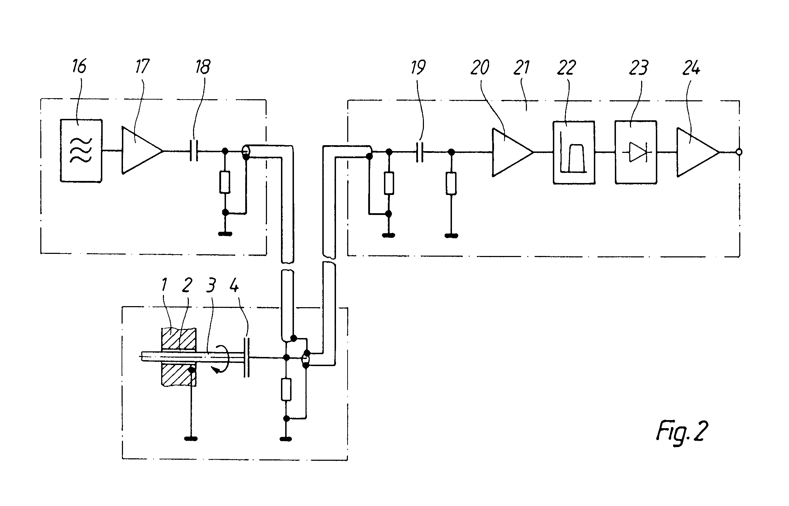

Bei der Ausführungsform nach der Fig. 2 ist die Koppelkapazität 4 mit einem eine feste Frequenz, vorzugsweise im Bereich von 1 bis 30MHz, liefernden Oszillator 16 über einen diesem nachgeschalteten Ausgangsverstärker und eine geschirmte Leitung verbunden, wobei diesem Ausgangsverstärker 17 eine definierte Ausgangskapazität 18 nachgeschaltet ist. Weiters ist die Koppelkapazität 4 mit der ebenfalls definierten Eingangskapazität 19 eines Eingangsverstärkers 20 einer Auswerteschaltung 21 über eine ebenfalls geschirmte Leitung verbunden. Diese Auswerteschaltung 21 umfaßt weiters ein dem Eingangsverstärker 20 nachgeschaltetes Bandpaßfilter 22, das auf die Frequenz des Oszillators 16 abgestimmt ist, sowie einen diesem nachgeschalteten Meßgleichrichter 23 und einen Ausgangsverstärker 24.

Bei dieser Ausführungsform ergibt sich eine Spannungsteilerschaltung, die durch die Ausgangskapazität 18 des Ausgangsverstärkers 17 und der Serienschaltung der Koppelkapazität 4 mit der Schmierspaltkapazität gebildet ist. Eine Änderung der Kapazität des Schmierspaltes 2 hat daher eine Änderung des Spannungsteilerverhältnisses und damit der über der genannten Serienschaltung abfallenden Spannung zur Folge, die in weiterer Folge über den Meßgleichrichter 23 erfaßt wird. Die Ausgangsspannung des Ausgangsverstärkers 24 ist daher vom Zustand des Schmierfilmes abhängig und ermöglicht daher eine Beurteilung des Zustandes desselben.

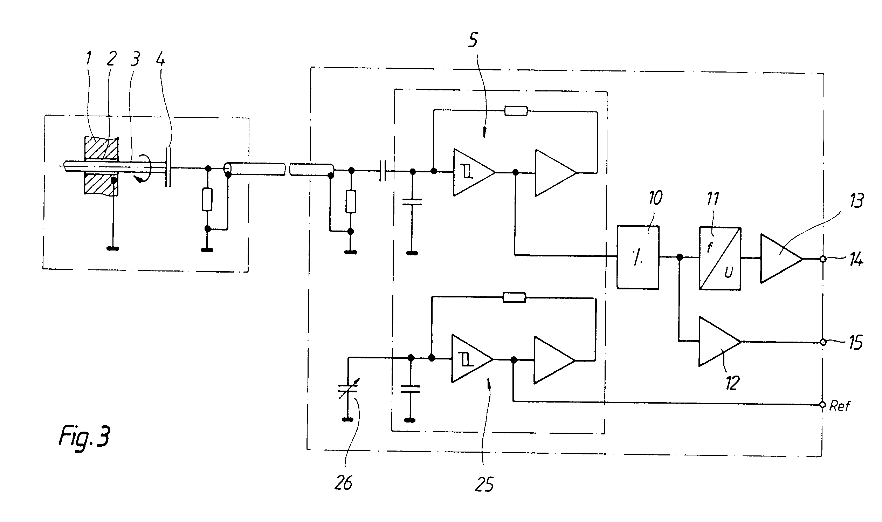

Die Ausführungsform nach der Fig. 3 unterscheidet sich von jener nach der Fig. 1 lediglich dadurch, daß ein Referenz-Oszillator 25 vorgesehen ist, der in gleicher Weise wie der Meßoszillator 5 ausgebildet und mit diesem thermisch gekoppelt ist. Dieser Referenz-Oszillator 25 liefert Signale mit annähernd der gleichen Frequenz wie der Meßoszillator 5, wobei die Frequenz des ersteren mittels des Kondensators 26, der an den Eingang des Referenzoszillators 25 angeschlossen ist, eingestellt werden kann.

Durch die thermische Kopplung und den gleichen Aufbau des Referenz-Oszillators wird erreicht, daß sich verschiedene Einflüsse auf beide Oszillatoren in gleicher Weise auswirken und so eine Kompensation erreicht wird.

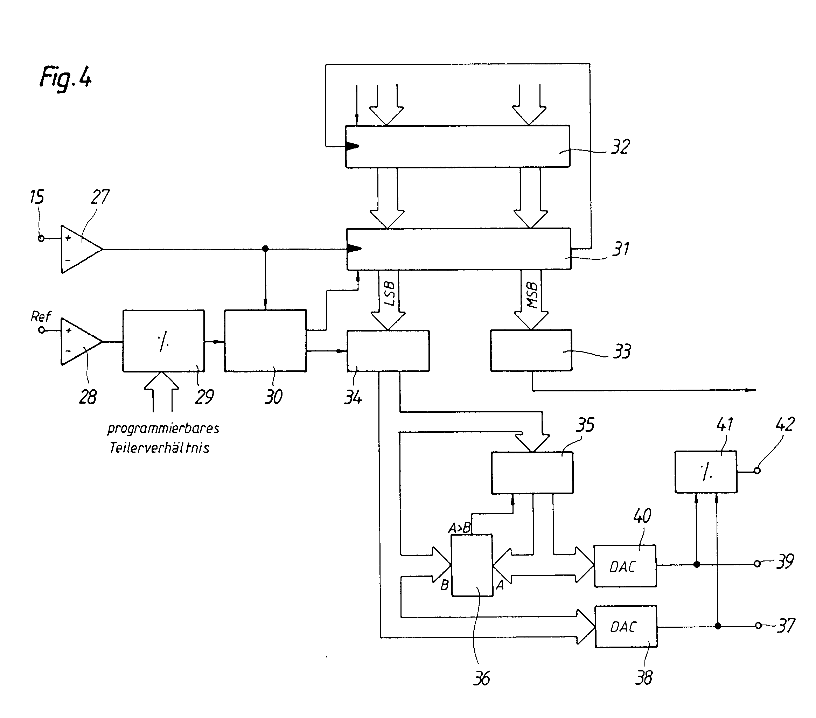

Fig. 4 zeigt eine mit der Einrichtung nach Fig. 3 einsetzbare Auswerteschaltung. Dabei ist der Ausgang Ref. und der Ausgang 15 der Meßoszillatoreinrichtung mit je einem Verstärker 27, 28 verbunden. Dem Verstärker 28, der eingangsseitig mit dem Ausgang Ref. verbunden ist, ist ein Frequenzteiler 29 mit programmierbarem Teilungsverhältnis und diesem eine Torschaltung 30 nachgeschaltet, die auch mit dem Verstärker 27 verbunden ist. Diese Torschaltung 30 wird z.B. durch die ansteigende Flanke eines Ausgangssignales des Frequenzteilers 29 vorbereitet und schaltet beim Eintreffen eines Signales des Verstärkers 27 durch. Abgeschaltet bzw. gesperrt wird die Torschaltung 30 mit der abfallenden Flanke eines Ausgangssignales des Frequenzteilers 29.

Der Ausgang des Verstärkers 27, der das verstärkte Meßsignal liefert, ist direkt mit dem Takteingang eines Abwärtszählers 31 verbunden, der bei Erreichen des Wertes Null ein Überlaufsignal an den Takteingang eines Aufwärtszählers 32 liefert, der mit einem vorgegebenen Wert geladen werden kann.

Der Aufwärts- und der Abwärtszähler 32, 31 sind geteilt ausgeführt, wobei die höchstwertigen Bits des Abwärtszählers 31 mit einer Überlaufanzeige 33, sowie gegebenenfalls mit einer nicht dargestellten Steuereinrichtung für den Frequenzteiler 29, der ein einstellbares Teilungsverhältnis aufweist, verbunden sind.

Der den geringstwertigen Bits des Abwärtszählers 31 zugeordnete Ausgang ist mit einem Speicher 34 verbunden, dessen Ausgang mit dem Eingang eines weiteren, als Spitzenwertspeicher 35 dienenden Speichers, einem Digitalkomparator 36 und einem dem Meßwertausgang 37 vorgeschalteten Digital/Analog-Wandler 38 verbunden. Der Ausgang des Spitzenwertspeichers 35 ist mit dem zweiten Eingang des Digitalkomparators 36 und einem weiteren, mit einem Maximalwertausgang 39 verbundenen Digital/Analog-Wandler 40 verbunden. Die Digital/Analog-Wandler 38, 40 sind ausgangsseitig mit den Eingängen eines als Normierschaltung dienenden Dividierers 41 verbunden, der ausgangsseitig mit einem Normierungsausgang 42 verbunden ist.

Die Auswerteschaltung nach Fig. 4 ermöglicht eine selbsttätige Kalibrierung und Kompensation von Umwelteinflüssen, insbesondere der Temperatur.

Wie bereits erwähnt, wird die Torschaltung 30 in Abhängigkeit von den Signalen des Frequenzteilers 29 und des Verstärkers 27 gesteuert. Diese Torschaltung liefert bei einem auf eine positive Flanke des Ausgangssignales des Frequenzteilers 29 folgenden Ausgangssignal des Verstärkers 27 einen Ladeimpuls an den Abwärtszähler 31, sodaß dieser den Zählerstand des mit seinen Setzeingängen verbundenen Aufwärtszählers 32 übernimmt und beginnt im Takt des Einlangens der Signale des Meßoszillators 5 nach abwärts zu zählen.

Trifft eine negative Flanke des Ausgangssignales des Frequenzteilers 29 in der Torschaltung 30 ein, so sperrt diese und gibt einen Sperrimpuls an den Abwärtszähler 31 und einen Ladeimpuls an den Speicher 34 ab, sodaß dieser den Zählerstand des Abwärtszählers 31 übernimmt.

Erreicht der Abwärtszähler vor dem Sperrsignal den Wert Null, so gibt er einen Zählimpuls an den Aufwärtszähler 32 ab, sodaß sich dessen Zählerstand um 1 erhöht. Dies bewirkt aber, daß der Abwärtszähler 31 beim nächsten mit einer positiven Flanke des Ausgangssignales des Frequenzteilers 29 beginnenden Meßzyklus mit einem entsprechend höheren Wert geladen wird. Dies wiederholt sich in der Einlaufphase der Schaltung so lange, bis der Abwärtszähler mit einem Wert geladen wird, bei dem er nicht mehr den Wert Null vor dem Ende der Torzeit erreicht und daher der Aufwärtszähler auf einem konstanten Wert stehen bleibt.

Zweckmäßigerweise wird die Messung zuerst bei den ungünstigsten Bedingungen für das Lager durchgeführt, bei dem sich daher ein entsprechend kleiner Schmierspalt und daher eine entsprechend hohe Frequenz des Meßoszillators 5 ergibt. Dies führt dazu, daß der Abwärtszähler 31 in jedem Meßzyklus auf einen Wert von nahe Null oder Null gebracht wird. Danach ist es zweckmäßig, das zu überwachende Lager unter den optimalsten Bedingungen laufen zu lassen, sodaß sich ein entsprechend großer Schmierspalt und damit eine entsprechend kleine Frequenz des Meßoszillators 5 ergibt.

Dies führt dazu, daß im Abwärtszähler ein entsprechender Wert am Ende einer Torzeit verbleibt und in den Speicher 34 geladen wird. Da während einer solchen Phase der Ausgang des Speichers 34 höher liegt als der Ausgang des Spitzenwertspeichers 35, gibt der Digitalkomparator 36 einen Ladeimpuls an den Spitzenwertspeicher 35 ab, sodaß dieser den höheren Wert übernimmt. Auf diese Weise kann der höchste Wert gespeichert werden und steht für eine weitere Auswertung zur Verfügung.

Diese Auswertung erfolgt in der Weise, daß der Maximalwert und der bei Messungen unter unterschiedlichen Betriebsbedingungen erfaßte aktuelle Zustand des Lagers, der durch den Zählerstand des Speichers 34 beschrieben wird, über Digital/Analog-Wandler einem Dividierer 41 zugeführt werden, der den aktuellen Wert durch den Maximalwert dividiert und auf diese Weise normiert. Dabei kann der Dividierer z.B. beim Maximalwert einen bestimmten Spannungspegel und bei einem unter dem Maximalwert liegenden aktuellen Wert ein zwischen diesem und Null Volt liegendes Potential liefern.

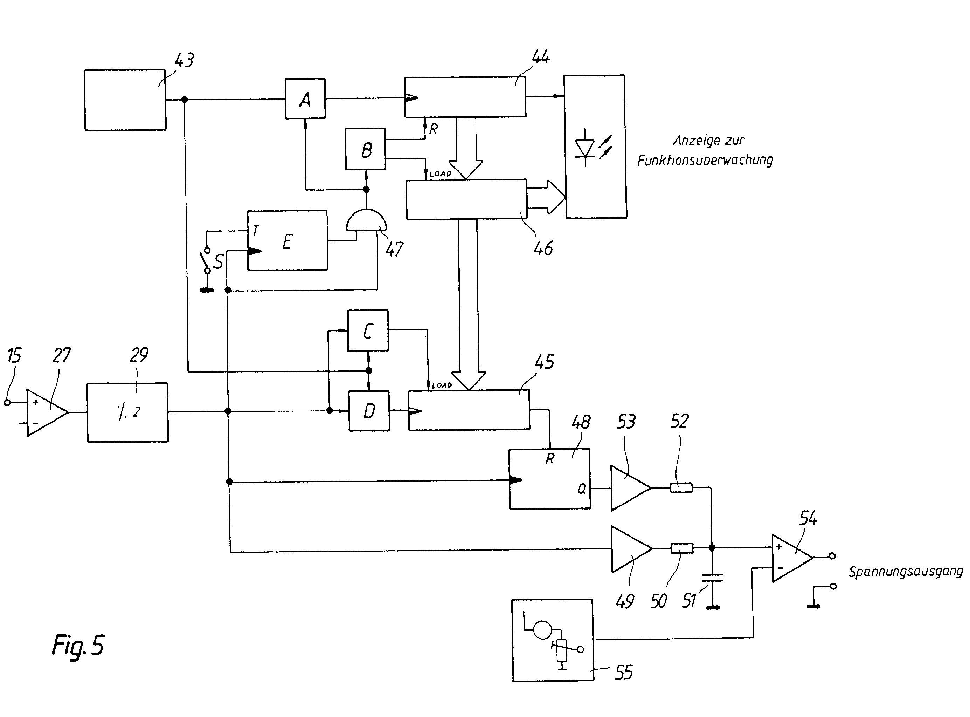

Bei der Auswerteschaltung nach der Fig. 5, die z.B. mit der Einrichtung nach der Fig. 1 zusammenarbeiten kann, ist dem Verstärker 27, der eingangsseitig mit dem Ausgang 15 des Meßoszillators 5 verbunden ist, ein Frequenzteiler 29 nachgeschaltet.

Weiters ist ein Taktgenerator 43 vorgesehen, der über eine von einer Synchronisierschaltung E gesteuerte Steuerschaltung A, die im wesentlichen durch einen gesteuerten Schalter gebildet ist, mit dem Takteingang eines Aufwärtszählers 44 und über eine weitere Steuerschaltung D, die vom Frequenzteiler 29 gesteuert ist, mit dem Takteingang eines Abwärtszählers 45 verbunden ist.

Der Ausgang des Aufwärtszählers 44 ist mit dem Setzeingang eines Speichers 46 verbunden, dessen Ausgang seinerseits mit dem Setzeingang des Abwärtszählers 45 verbunden ist.

Weiters steuert der Frequenzteiler 29 noch eine weitere Steuerschaltung C, die ähnlich den Steuerschaltungen A und D aufgebaut ist und bewirkt, daß bei Einlangen einer positiven Flanke des Ausgangssignales des Frequenzteilers 29 und einer positiven Flanke des vom Taktsignalgenerator 43 gelieferten Impulszuges ein Ladeimpuls an den Abwärtszähler 45 abgegeben wird und dieser den Zählerstand des Speichers 46 übernimmt, der in einer der Messung vorangegangenen Kalibrierung festgelegt wurde.

Die Steuerschaltung D wird ebenfalls durch eine positive Flanke des Ausgangssignales des Frequenzteilers 29 vorbereitet und läßt dann die negativen Flanken des vom Taktsignalgenerator gelieferten Impulszuges durch, die ein Herabzählen des Zählers 45 bewirken.

Die Kalibrierung der Schaltung erfolgt in der Weise, daß der Schalter S geschlossen wird und damit die Synchronisierschaltung E vorbereitet wird. Bei der nächsten positiven Flanke des Ausgangssignales des Frequenzteilers 29 gibt diese ein Ausgangssignal ab, wodurch das UND-Glied 47 das Signal des Frequenzteilers 29 durchschaltet. Dies bewirkt, daß die Steuerschaltung A ebenfalls durchschaltet, sodaß der Taktsignalgenerator 43 mit dem Aufwärtszähler 44 verbunden ist und dieser dessen Signale zählt.

Weiters bewirkt die positive Flanke des Ausgangssignales des UND-Gliedes 47, daß die Steuerschaltung B einen Rücksetzimpuls an den Aufwärtszähler 44 abgibt, sodaß dieser bei jedem durch das Signal des Frequenzteilers bestimmten Zyklus von null aus zu zählen beginnt. Die negative Flanke des Signales des UND-Gliedes bewirkt dagegen, daß die Steuerschaltung A sperrt und danach die Steuerschaltung B einen Ladeimpuls an den Speicher 46 abgibt, sodaß dieser den Zählerstand des Zählers 44 übernimmt.

Wird der Schalter S zu einem beliebigen Zeitpunkt geöffnet, so hat dies keine unmittelbaren Auswirkungen auf die Steuerschaltungen A und B, da die Synchronisierschaltung E erst durch eine negative Flanke des Ausgangssignales des Frequenzteilers wieder rückgesetzt werden kann, nach dem Öffnen des Schalters S aber bei Einlangen der nächsten positiven Flanke kein Ausgangssignal mehr abgibt.

Weiters wird von dem Frequenzteiler 29 noch ein Flip-Flop 48, dessen Rücksetzeingang mit dem Ausgang des Abwärtszählers verbunden ist, an dem ein Ausgangssignal erscheint, sobald der Zähler den Wert Null erreicht hat und ein Schalter 49 gesteuert. Dabei wird dieser Schalter 49 durch ein Signal des Frequenzteilers in den leitenden Zustand gebracht und schaltet ein festes Potential zu dem Widerstand 50 durch, der mit dem Kondensator 51 eines R/C-Gliedes 52, 51 verbunden ist, dessen Widerstand 52 von dem Ausgang des Flip-Flops 48 über einen weiteren mit einem anderen festen Potential verbundenen Schalter 53 gesteuert ist.

Tritt eine positive Flanke am Ausgang des Frequenzteilers 29 auf, so gibt die Steuerschaltung C einen Ladeimpuls an den Abwärtszähler 45 ab, sodaß dieser den bei der oben beschriebenen Kalibrierung, die zweckmäßigerweise bei einem unter optimalsten Bedingungen laufenden Lager vorgenommen wird, wodurch sich entsprechend lange Ausgangssignale des Frequenzteilers ergeben, erfaßten Zählerstand des Speichers 46 übernimmt. Weiters wird dadurch auch die Durchschaltung des Taktgenerators 43 zum Takteingang des Abwärtszählers bewerkstelligt und der Zähler zählt von dem übernommenen Wert nach abwärts.

Gleichzeitig wurde auch das Flip-Flop 48 gesetzt, sodaß der Schalter 53 ein festes Potential, z.B. +5V, zum Widerstand 52 durchschaltet, und der Schalter 49 angesteuert, sodaß auch dieser ein festes Potential, allerdings ein von jenem des Schalters 53 verschiedenes, z.B. -5V, zum Widerstand 50, dessen Wert gleich jenem des Widerstandes 52 ist, durchschaltet.

Dies bewirkt, daß der Kondensator 51 ein dem Mittelwert der beiden Potentiale entsprechende Spannung annimmt. Tritt nun die negative Flanke des Ausgangssignales des Frequenzteilers 29 auf, bevor der Zähler 45 seinen Wert Null erreicht, so unterbricht der Schalter 49 und die Spannung am Kondensator 51 nähert sich dem vom Schalter 53 gesteuerten Potential. Erreicht dagegen der Zähler 45 vor dem Eintreffen der negativen Flanke des Ausgangssignales des Frequenzteilers 29 den Wert Null, so unterbricht zuerst der Schalter 53, da das Flip-Flop 48 rückgesetzt wird, wodurch sich die Spannung am Kondensator dem vom Schalter 49 gesteuerten Potential nähert.

Die am Kondensator 51 anstehende Spannung wird einem Differenzverstärker 54 zugeführt, dessen zweiter Eingang mit einer Referenzspannungsquelle 55 verbunden ist. Die vom Differenzverstärker 54 gelieferte Spannung entspricht daher dem Zustand des Schmierfilmes, da die Frequenz des Meßoszillators 5 von diesem abhängt.

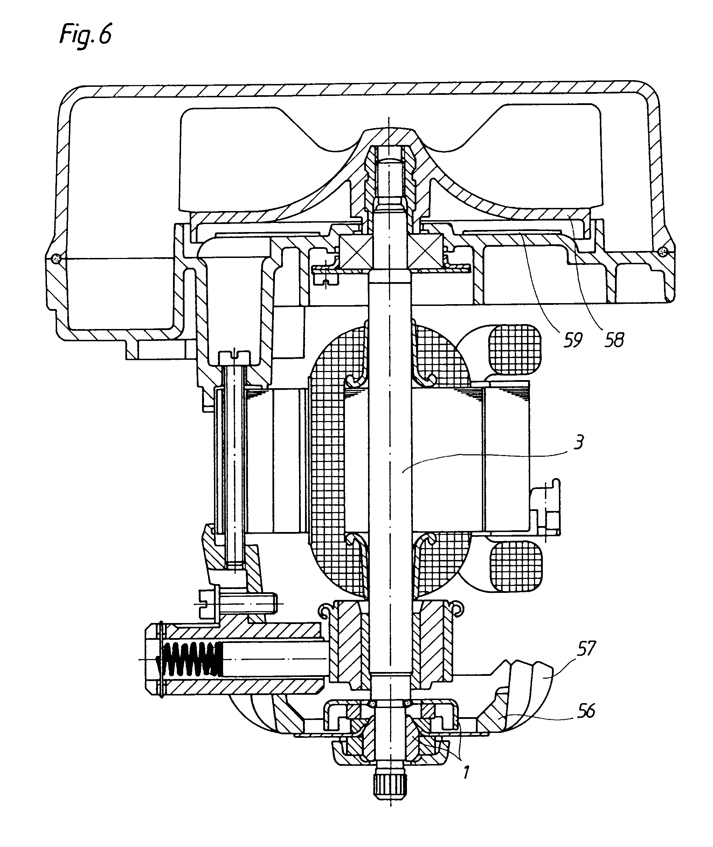

In den Fig. 6 bis 9 sind verschiedene Möglichkeiten der Anordnung eines zu überwachenden Lagers und der Anbringung eines Koppelkondensators 4 an einer Maschine dargestellt.

Die Fig. 6 zeigt schematisch einen üblichen Kleinmotor, wie er z.B. in Staubsaugern verwendet wird.

Bei diesem ist die aus einem Sintermaterial hergestellte Lagerschale 3 über einen Isolierring 56 und einer bekannten Halterung im Gehäuse 57 abgestützt. An der Welle 3 ist ein Lüfterrad 58 befestigt, dessen dem Lager 1 zugekehrte Seite eine Elektrode des Koppelkondensators 4 bildet. Die zweite Elektrode dieses Koppelkondensators 4 ist durch eine an der dem Lüfterrad 58 zugekehrten Seite des Gehäuses 57 angeordnete isolierende Folie 59 gebildet, die an der dem Lüfterrad zugekehrten Seite mit einer elektrisch leitenden Schichte versehen ist, die auch mit der zur Auswerteschaltung bzw. zum Meßoszillator 5 führenden Leitung verbunden ist. Weiters ist die Lagerschale 1 bzw. die vom übrigen Gehäuse elektrisch isolierte Halterung desselben mit der Auswerteschaltung, bzw. dem Meßoszillator 5 über einen Masseanschluß verbunden. Damit ergeben sich die in den Fig. 1 bis 3 schematisch dargestellten Verhältnisse.

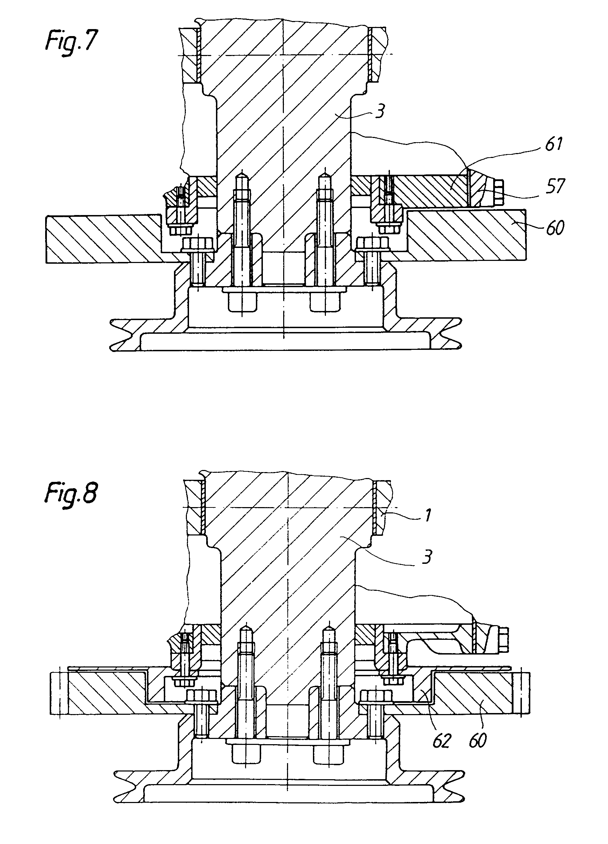

Bei der Fig. 7 dient eine mit der Welle 3 elektrisch leitend verbundene Schwungscheibe 60 als eine Elektrode des Koppelkondensators, dessen zweite Elektrode durch einen vom übrigen Gehäuse 57 über eine Isolierhülse elektrisch isolierten Konstruktionsteil 61 gebildet ist, an dem auch der Anschluß für den Meßoszillator 5 angeordnet ist.

Einen ähnlichen Aufbau zeigt auch Fig. 8. Bei diesem dient ebenfalls das Schwungrad als Elektrode des Koppelkondensators, die elektrisch leitend mit der Welle 3 verbunden ist. Die zweite Elektrode wird dabei durch einen Isolierring 62 gebildet, der an einem Gehäuseteil befestigt ist und an einer Seite mit einer elektrisch leitenden Schichte versehen ist, die auch die Kontaktierung für den Anschluß an die Auswerteschaltung bzw. den Meßoszillator 5 aufweist. Die Lagerschale 1 kann elektrisch isoliert im Gehäuse gehalten sein. Dies ist nur erforderlich, wenn dieses Lager für sich überwacht werden soll. Sollen dagegen alle Lager der Maschine gemeinsam überwacht werden, so kann auf eine isolierte Halterung der Lagerschale verzichtet werden.

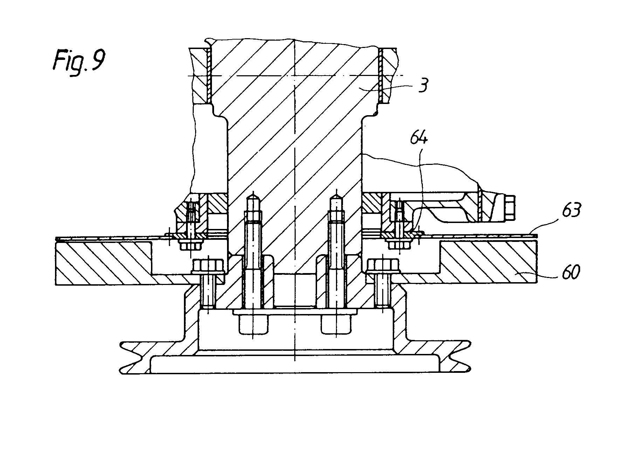

Fig. 9 zeigt eine Variante zur Ausführungsform gemäß der Fig. 8, bei der eine Metallscheibe 63 in der Nähe der mit der Welle 3 elektrisch leitend verbundenen Schwungscheibe 60 gehalten ist, die auch bei dieser Ausführungsform eine Elektrode des Kopplungskondensators darstellt. Dabei ist diese Metallscheibe 63 über eine Isolierscheibe 64 an einem Gehäuseteil befestigt.

**Patentansprüche**

1. Einrichtung zur Messung eines gegebenenfalls von einem Film eines im wesentlichen flüssigen oder pastösen Mediums, z.B. eines Filmes aus Schmierstoff, Pasten, Wasser od. dgl., erfüllten Abstandes zwischen einem ruhenden und einem gegenüber diesem bewegten Element, wie z.B. zwischen Lagerschale(n) und Welle, bei der eine das den zu überwachenden Abstand erfüllende Medium mit einem elektrischen Signal beaufschlagende und dessen die Meßimpedanz bildende Impedanz erfassende Auswerteschaltung vorgesehen ist, wobei die den Abstand begrenzenden Teile elektrisch leitfähig oder mit elektrisch leitenden Kontakten versehen sind, **dadurch gekennzeichnet**, daß das zwischen den beiden Elementen (1, 3) befindliche Medium, bzw. der zwischen diesen vorhandene Film (2) zu mindestens einer weiteren, eine berührungslose Signalübertragung zwischen dem bewegten (3) und ruhenden Element (1) ermöglichenden Koppelimpedanz (4) oder einer weiteren, durch die Impedanz eines einen weiteren zu überwachenden Abstand erfüllenden Medium gebildeten Meßimpedanz, die ihrerseits mit der Auswerteschaltung elektrisch verbunden ist, elektrisch in Serie geschaltet ist, wobei über das bewegte Element (3) oder den darauf befindlichen elektrisch leitenden Kontakt die elektrische Verbindung zwischen der Meßimpedanz und der Koppelimpedanz oder zwischen den Meßimpedanzen hergestellt ist.

2. Einrichtung nach Anspruch 1, **dadurch gekennzeichnet**, daß die Koppelimpedanz durch eine zur Meßimpedanz in Serie geschaltete Kapazität (4) gebildet ist, wobei an einem der durch den Schmierfilm (2) getrennten Teile (1, 3) ein Wechselspannungssignal anliegt und der andere mit einer Elektrode des die Koppelimpedanz bildenden Kondensators (4) mechanisch und elektrisch verbunden ist, dessen andere Elektrode mit der Auswerteschaltung verbunden ist.

3. Einrichtung nach Anspruch 1 oder 2, **dadurch gekennzeichnet**, daß der die Koppelimpedanz bildende Kondensator (4) eine Kapazität aufweist, deren Größe im Bereich jener der Schmierspaltkapazität liegt.

4. Einrichtung nach einem der Ansprüche 1 bis 3, bei der der Schmierfilm mehrerer Lager einer Maschine erfaßbar ist, **dadurch gekennzeichnet**, daß die Lagerschalen (1) der Lager elektrisch von den übrigen Maschinenteilen isoliert angeordnet sind.

5. Einrichtung nach einem der Ansprüche 1 bis 4, **dadurch gekennzeichnet**, daß die Meß- und die Koppelimpedanz (4) im frequenzbestimmenden Kreis eines Meßoszillators (5) geschaltet sind, der Teil der Auswerteschaltung ist, die weiters noch einen Frequenzmeßkreis umfaßt.

6. Einrichtung nach einem der Ansprüche 1 bis 5, **dadurch gekennzeichnet**, daß die Auswerteschaltung weiters einen Referenz-Oszillator (25) der gleichen Bauart wie der Meßoszillator (5) aufweist, in dessen frequenzbestimmendem Kreis Störeinflüsse erfassende Fühler, z.B. Temperaturfühler, angeordnet sind, oder der mit dem Meßoszillator (5) thermisch gekoppelt ist, wobei die Ausgänge dieses Referenz-Oszillators (25) und des Meßoszillators (5) mit einer Korrekturschaltung verbunden sind.

7. Einrichtung nach einem der Ansprüche 1 bis 6, **dadurch gekennzeichnet**, daß die Meß- und Koppelimpedanz (4) mit hochfrequenten Signalen, vorzugsweise im Bereich von 1 bis 30MHz beaufschlagt sind.

8. Einrichtung nach Anspruch 5, **dadurch gekennzeichnet**, daß der Frequenzmeßkreis der Auswerteschaltung einen mit einem bestimmten Zählerstand ladbaren Zähler (31) aufweist, der über eine, vorzugsweise vom Referenz-Oszillator (25) gesteuerte Torschaltung (30) mit den Signalen des Meßoszillators (5) beaufschlagbar ist und der Zähler (31) mit einem von der Torschaltung (30) gesteuerten Speicher (34) verbunden ist, der zu vorgegebenen Zeitpunkten den Zählerstand übernimmt, der ein Maß für den Zustand des Schmierfilmes ist, wobei die vom Referenz-Oszillator (25) gesteuerte Torschaltung (30) in Verbindung mit dem von dem Meßoszillator (5) getakteten Zähler (31) die Korrekturschaltung bilden.

9. Einrichtung nach Anspruch 8, **dadurch gekennzeichnet**, daß der Zähler als Abwärtszähler (31) ausgebildet ist und bei Erreichen des Zählerstandes Null an einem mit dem Zähleingang eines Aufwärtszählers (32) verbundenen Ausgang ein Signal abgibt, wobei der Ausgang des Aufwärtszählers (32) mit dem Setzeingang und die Torschaltung (30) mit einem ein Setzen des Abwärtszählers (31) ermöglichenden Ladeeingang des Abwärtszählers (31) verbunden ist.

10. Einrichtung nach Anspruch 6 oder 9, **dadurch gekennzeichnet**, daß der Ausgang des dem Abwärtszähler (31) nachgeschalteten Speichers (34) mit dem Setzeingang eines weiteren, als Spitzenwertspeicher dienenden Speichers (35) und einem Komparator (36), dessen zweiter Eingang mit dem Ausgang des Spitzenwertspeichers (35) verbunden ist, wobei der Ausgang des Komparators (36) mit dem Ladeeingang des Spitzenwertspeichers (35) verbunden ist und einen Ladeimpuls abgibt, wenn der Zählerstand des Spitzenwertspeichers (35) unter jenem des diesem vorgeschalteten Speichers (34) liegt.

11. Einrichtung nach einem der Ansprüche 8 bis 10, **dadurch gekennzeichnet**, daß die Ausgänge der beiden Speicher (34, 35) mit einem als Normierschaltung dienenden Dividierer (41), gegebenenfalls unter Zwischenschaltung von Digital/Analogwandlern (38, 40) verbunden sind.

12. Einrichtung nach einem der Ansprüche 8 bis 11, **dadurch gekennzeichnet**, daß zumindest der Abwärtszähler (31) geteilt ausgebildet ist, wobei der Ausgang der geringstwertigen Bits mit dem von der Torschaltung (30) gesteuerten Speicher (34) und der Ausgang der höchstwertigen Bits mit einer Überlaufanzeige (33) und gegebenenfalls einem der Torschaltung vorgeschalteten Frequenzteiler (29) mit einstellbarem Teilungsverhältnis verbunden ist.

13. Einrichtung nach einem der Ansprüche 1 bis 5, **dadurch gekennzeichnet**, daß die Auswerteschaltung neben dem Meßoszillator (5) einen Taktoszillator (43) aufweist, dessen Ausgang mit dem Takteingang eines Zählers, vorzugsweise eines Abwärtszählers (45), über eine von den Ausgangssignalen des Meßoszillators (5) gesteuerte Freigabeschaltung (29) verbindbar ist, die auch die Ladung des Zählers mit einem vorbestimmten Wert steuert und eine einen bestimmten Zählerstand des Zählers (45) mit dem Eintreffen einer bestimmten Anzahl von Signalen des Meßoszillators (5) vergleichende Schaltung (29, 48, 49, 50, 51, 52, 53) vorgesehen ist.

14. Einrichtung nach Anspruch 13, **dadurch gekennzeichnet**, daß der Ausgang des Zählers (45), gegebenenfalls unter Zwischenschaltung eines Flip-Flops (48) mit dem Steuereingang eines an einem festen Potential angeschlossenen Schalters (53), an dem ein Integrierglied (52, 51) angeschlossen ist, verbunden ist und ein weiterer, an einem zweiten unterschiedlichen Potential angeschlossener Schalter (49) vorgesehen ist, an dem das selbe Integrierglied (52, 51) über einen Widerstand (50) angeschlossen ist, der gleich dem Widerstand (52) des Integriergliedes ist, wobei dieser Schalter (49) von den Ausgangssignalen des Meßoszillators (5) gesteuert ist, wobei zur Überwachung des Eintreffens einer bestimmten Anzahl von Signalen des Meßoszillators (5) vorzugsweise ein Frequenzteiler (29) vorgesehen ist.

15. Einrichtung nach Anspruch 13 oder 14, **dadurch gekennzeichnet**, daß eine Kalibrierschaltung vorgesehen ist, die durch einen mit seinem Takteingang mit dem Taktgenerator (43) verbundenen Zähler, vorzugsweise einen Aufwärtszähler (44) und einen diesen nachgeschalteten Speicher (46) gebildet ist, dessen Ausgang mit dem Setzeingang des von der Freigabeschaltung (29) gesteuerten Zählers (45) verbunden ist, wobei eine von einem Schalter (S) und den Signalen des Meßoszillators (5) gesteuerte Synchronisierschaltung (E) vorgesehen ist, die den Taktoszillator (43) für eine bestimmte Zeit zum Zähler (44) der Kalibrierschaltung durchschaltet und dessen Zählerstand nach dieser Zeit in den Speicher (46) einliest.

16. Einrichtung nach einem der Ansprüche 1 bis 4, **dadurch gekennzeichnet**, daß die Koppelimpedanz (4) mit einem konstante Frequenz liefernden Oszillator (16) über eine definierte Impedanz (18) in Verbindung steht und der Eingangskreis der Auswerteschaltung (21) eine definierte Impedanz (19) aufweist, die vorzugsweise parallel zur Koppel- und Meßimpedanz geschaltet ist, welche Auswerteschaltung im wesentlichen durch einen Meßgleichrichter (23) gebildet ist, dem gegebenenfalls ein Bandpaßfilter (22) vorgeschaltet ist.


**Revendications**

1. Dispositif de mesure d'un espace rempli le cas échéant d'un film d'un agent essentiellement liquide ou pâteux, par exemple, un film de lubrifiant, de pâte, d'eau ou analogues, entre un élément statique et un élément mobile par rapport à celui-ci, par exemple, entre une ou des coquilles de coussinets et un arbre, dispositif dans lequel un agent remplissant l'espace à contrôler est pourvu d'un montage d'évaluation délivrant un signal électrique et enregistrant son impédance qui forme l'impédance de mesure, les pièces délimitant l'espace précité étant conductrices de l'électricité ou étant pourvues de contacts conducteurs de l'électricité, caractérisé en ce que l'agent qui se trouve entre les deux éléments (1, 3), ou le film (2) présent entre ceux-ci, est connecté électriquement en série à au moins une autre impédance de couplage (4) permettant la transmission de signaux sans contact entre l'élément mobile (3) et l'élément statique (1) ou à une autre impédance de mesure formée par l'impédance d'un agent remplissant un autre espace à contrôler, impédance de mesure qui est, à son tour, connectée électriquement au montage d'évaluation, la liaison électrique entre l'impédance de mesure et l'impédance de couplage ou entre les impédances de mesure étant réalisée via l'élément mobile (3) ou le contact conducteur de l'électricité qui s'y trouve.

**2.** Dispositif selon la revendication 1, caractérisé en ce que l'impédance de couplage est formée par une capacité (4) connectée en série à l'impédance de mesure, un signal de tension alternative étant appliqué à l'une des parties (1, 3) séparées par le film de lubrifiant (2) et l'autre étant connectée mécaniquement et électriquement à une électrode du condensateur (4) formant l'impédance de couplage, dont l'autre électrode est connectée au montage d'évaluation.

**3.** Dispositif selon le revendication 1 ou 2, caractérisé en ce que le condensateur (4) formant l'impédance de couplage présente une capacité dont l'ordre de grandeur se situe au voisinage de celui de la capacité de l'espace de lubrifiant.

**4.** Dispositif selon l'une quelconque des revendications 1 à 3, qui permet d'enregistrer le film de lubrifiant de plusieurs paliers d'une machine, caractérisé en ce que les coquilles (1) des coussinets sont agencées de manière à être isolées électriquement des autres pièces de la machine.

**5.** Dispositif selon l'une quelconque des revendications 1 à 4, caractérisé en ce que l'impédance de mesure et l'impédance de couplage (4) sont connectées dans le circuit déterminant la fréquence d'un oscillateur de mesure (5) qui fait partie du montage d'évaluation qui comporte par ailleurs également un circuit de mesure de fréquence.

**6.** Dispositif selon l'une quelconque des revendications 1 à 5, caractérisé en ce que le montage d'évaluation présente par ailleurs un oscillateur de référence (25) du même type que l'oscillateur de mesure (5), dans le circuit déterminant la fréquence duquel sont agencés des capteurs détectant des perturbations parasites, par exemple des capteurs de température, ou qui est couplé à l'oscillateur de mesure (5) par voie thermique, les sorties de cet oscillateur de référence (25) et de l'oscillateur de mesure (5) étant connectées à un montage correcteur.

**7.** Dispositif selon l'une quelconque des revendications 1 à 6, caractérisé en ce que l'impédance de mesure et l'impédance de couplage (4) sont alimentées en signaux de haute fréquence, de préférence dans la plage de 1 à 30 MHz.

**8.** Dispositif selon la revendication 5, caractérisé en ce que le circuit de mesure de fréquence du montage d'évaluation comporte un compteur (31) qui peut être chargé d'une position de comptage déterminée et qui peut être alimenté, via un circuit porte (30) commandé, de préférence, par l'oscillateur de référence (25), par les signaux de l'oscillateur de mesure (5), et en ce que le compteur (31) est connecté à une mémoire (34) commandée par le circuit porte (30), mémoire qui transfère à intervalles de temps prédéterminés la position de comptage qui constitue une mesure de l'état du film de lubrifiant, le circuit porte (30) commandé par l'oscillateur de référence (25) formant en liaison avec le compteur cadencé (31) par l'oscillateur de mesure (5) le montage correcteur.

**9.** Dispositif selon la revendication 8, caractérisé en ce que le compteur est un compteur à rebours (31) qui, lorsque la position de comptage 0 est atteinte, délivre un signal à une sortie connectée à l'entrée de comptage d'un compteur normal (32), la sortie du compteur normal (32) étant connectée à l'entrée d'activation et le circuit porte (30) à une entrée de chargement du compteur à rebours (31) permettant une activation du compteur à rebours (31).

**10.** Dispositif selon la revendication 6 ou 9, caractérisé en ce que la sortie de la mémoire (34) connectée en aval du compteur à rebours (31) est connectée à l'entrée d'activation d'une autre mémoire (35) servant de mémoire de valeurs de crête et à un comparateur (36), dont la seconde entrée est connectée à la sortie de la mémoire de valeurs de crête (35), la sortie du comparateur (36) étant connectée à l'entrée de chargement de la mémoire de valeurs de crête (35) et délivrant une impulsion de chargement lorsque la position de comptage de la mémoire de valeurs de crête (35) se situe en dessous de celle de la mémoire (34) connectée en amont de celle-ci.

**11.** Dispositif selon l'une quelconque des revendications 8 à 10, caractérisé en ce que les sorties des deux mémoires (34, 35) sont connectées à un diviseur (41) servant de montage de normalisation, éventuellement en intercalant des convertisseurs numériques/analogiques (38, 40).

**12.** Dispositif selon l'une quelconque des revendications 8 à 11, caractérisé en ce qu'au moins le compteur à rebours (31) est segmenté, la sortie du bit de moindre valeur étant connectée à la mémoire (34) commandée par le circuit porte (30) et la sortie du bit de plus haute valeur étant connectée à un indicateur de dépassement de capacité (33) et éventuellement à un diviseur de fréquence (29) connecté en amont du circuit porte et dont le rapport de division est réglable.

**13.** Dispositif selon l'une quelconque des revendications 1 à 5, caractérisé en ce que le montage d'évaluation présente, outre l'oscillateur de mesure (5), un oscillateur de cadence (43) dont la sortie peut être connectée à l'entrée de cadence d'un compteur, de préférence un compteur à rebours (45), via un montage de validation (29) commandé par les signaux de sortie de l'oscillateur de mesure (5), montage qui commande également le chargement du compteur par une valeur prédéterminée, et en ce qu'il est prévu un montage (29, 48, 49, 50, 51, 52, 53) comparant une position de comptage déterminée du compteur (45) à l'arrivée d'un nombre déterminé de signaux issus de l'oscillateur de mesure (5).

**14.** Dispositif selon la revendication 13, caractérisé en ce que la sortie du compteur (45) est connectée, éventuellement en intercalant un flip-flop (48), à l'entrée de commande d'un commutateur (53) raccordé à un potentiel fixe, auquel un circuit d'intégration (52, 51) est raccordé, et il est prévu un autre commutateur (49) raccordé à un second potentiel différent, commutateur auquel le même circuit d'intégration (52, 51) est raccordé via une résistance (50) qui est identique à la résistance (52) du circuit d'intégration (52, 51), ce commutateur (49) étant commandé par les signaux de sortie de l'oscillateur de mesure (5) et un diviseur de fréquence (29) étant prévu de préférence pour contrôler l'arrivée d'un nombre déterminé de signaux de l'oscillateur de mesure (5).

**15.** Dispositif selon la revendication 13 ou 14, caractérisé en ce qu'il est prévu un montage d'étalonnage qui est formé par un compteur connecté par son entrée de cadence au générateur de cadence (43), de préférence un compteur normal (44), et d'une mémoire (46), dont la sortie est connectée à l'entrée d'activation du compteur (45) commandé par le montage de validation (29), un montage de synchronisation (E) commandé par un commutateur (S) et par les signaux de l'oscillateur de mesure (5) étant prévu, ce montage commutant l'oscillateur de cadence (43) pendant un intervalle de temps déterminé avec le compteur (44) du montage d'étalonnage et lisant sa position de comptage après l'intervalle de temps précité dans la mémoire (46).

**16.** Dispositif selon l'une quelconque des revendications 1 à 4, caractérisé en ce que l'impédance de couplage (4) est connectée à un oscillateur (16) délivrant une fréquence constante via une impédance définie (18) et le circuit d'entrée du montage d'évaluation (21) présente une impédance définie (19) qui est commutée de préférence en parallèle avec l'impédance de couplage et l'impédance de mesure, le montage d'étalonnage étant formé essentiellement d'un redresseur de mesure (23) en amont duquel est monté éventuellement un filtre passe-bande (22).

## Claims

**1.** Apparatus for measuring a gap, optionally filled by a film of an essentially liquid or pasty medium, for example a film of lubricant, pastes, water or the like, between a stationary component and a component moving with respect to the latter, such as, for example, between bearing half-liner(s) and axle, in which apparatus an evaluation circuit is provided which applies an electrical signal to the medium filling the gap to be monitored and measures its impedance which forms the measurement impedance, the parts bounding the gap being electrically conductive or being provided with electrically conducting contacts, characterised in that the medium contained between the two components (1, 3) or the film (2) present between the latter is electrically connected in series with at least one further coupling impedance (4) which makes possible a contact-free signal transmission between the moving component (3) and stationary component (1) or with a further measurement impedance formed by the impedance of a medium filling a further gap to be monitored, which measurement impedance is in turn electrically connected to the evaluation circuit, the electrical connection between the measurement impedance and the coupling impedance or between the measuring impedances being made via the moving component (3) or the electrically conducting contact situated thereon.

**2.** Apparatus according to Claim 1, characterised in that the coupling impedance is formed by a capacitance (4) connected in series with the measurement impedance, an alternating voltage signal being applied to one of the parts (1, 3) separated by the lubricating film (2) and the other part being mechanically and electrically connected to one electrode of the capacitor (4) which forms the coupling impedance and whose other electrode is connected to the evaluation circuit.

3. Apparatus according to Claim 1 or 2, characterised in that the capacitor (4) forming the coupling impedance has a capacitance whose magnitude is in the region of that of the lubrication gap capacitance.

4. Apparatus according to one of Claims 1 to 3, in which the lubricating film of a plurality of bearings of a machine can be measured, characterised in that the bearing half-liners (1) of the bearings are arranged so as to be insulated electrically from the other machine parts.

5. Apparatus according to one of Claims 1 to 4, characterised in that the measurement impedance and the coupling impedance (4) are connected in the frequency-determining circuit of a measurement oscillator (5) which is part of the evaluation circuit which furthermore also contains a frequency-measurement circuit.

6. Apparatus according to one of Claims 1 to 5, characterised in that the evaluation circuit furthermore contains a reference oscillator (25) of the same type as the measurement oscillator (5), in whose frequency-determining circuit sensors, for example temperature sensors, which measure disturbing effects are provided or which is thermally coupled to the measurement oscillator (5), the outputs of said reference oscillator (25) and of the measurement oscillator (5) being connected to a compensating circuit.

7. Apparatus according to one of Claims 1 to 6, characterised in that high-frequency signals, preferably in the range from 1 to 30 MHz, are applied to the measurement impedance and coupling impedance (4).

8. Apparatus according to Claim 5, characterised in that the frequency measurement circuit of the evaluation circuit has a counter (31) which can be loaded with a particular counter reading and to which measurement oscillator (5) signals can be applied via a gate circuit (30), which is preferably controlled by the reference oscillator (25), and the counter (31) is connected to a memory (34) which is controlled by the gate circuit (30) and which receives, at predetermined time instants, the counter reading, which is a measure of the state of the lubricating film, the gate circuit (30) controlled by the reference oscillator (25) forming, in conjunction with the counter (31) clocked by the measurement oscillator (5), the compensation circuit.

9. Apparatus according to Claim 8, characterised in that the counter is designed as a down-counter (31) and delivers a signal to an output connected to the counting input of an up-counter (32) on reaching the counter reading zero, the output of the up-counter (32) being connected to the set input and the gate circuit (30) being connected to a loading input of the down-counter (31) which enables setting of the down-counter (31).

10. Apparatus according to Claim 6 or 9, characterised in that the output of the memory (34) downstream of the down-counter (31) is connected to the set input of a further memory (35) which serves as peak-value memory, and a comparator (36) whose second input is connected to the output of the peak-value memory (35), the output of the comparator (36) being connected to the loading input of the peak-value memory (35) and delivering a loading pulse whenever the counter reading of the peak-value memory (35) is below that of the memory (34) upstream of it.

11. Apparatus according to one of Claims 8 to 10, characterised in that the outputs of the two memories (34, 35) are connected to a divider (41) which serves as standardisation circuit, optionally with the insertion of digital/analog converters (38, 40).

12. Apparatus according to one of Claims 8 to 11, characterised in that at least the down-counter (31) is of partitioned design, the least significant bits output being connected to the memory (34) controlled by the gate circuit (30) and the most significant bits output being connected to an over-range indicator (33) and, optionally, to a frequency divider (29) with adjustable division ratio upstream of the gate circuit.

13. Apparatus according to one of Claims 1 to 5, characterised in that the evaluation circuit contains, in addition to the measurement oscillator (5), a clock oscillator (43) whose output can be connected to the clock input of a counter, preferably a down-counter (45), via an enabling circuit (29) which is controlled by the. measurement oscillator (5) output signals and which also controls the loading of the counter with a predetermined value, and a circuit (29, 48, 49, 50, 51, 52, 53) is provided which compares a particular counter

13

reading of the counter (45) with the arrival of a particular number of measurement oscillator (5) signals.

14. Apparatus according to Claim 13, characterised in that the output of the counter (45) is connected, optionally with the insertion of a flip-flop (48), to the control input of a switch (53) which is connected to a fixed potential and to which an integrating element (51, 52) is connected, and a further switch (49) is provided which is connected to a second, different potential and to which the same integrating element (52, 51) is connected via a resistor (50) which is equal to the resistor (52) of the integrating element, said switch (49) being controlled by the output signals of the measurement oscillator (5), a frequency divider (29) preferably being provided to monitor the arrival of a particular number of measurement oscillator (5) signals.

15. Apparatus according to Claim 13 or 14, characterised in that a calibration circuit is provided which is formed by a counter, preferably an up-counter (44), connected by its clock input to the clock generator (43) and by a memory (46) which is downstream of the counter and whose output is connected to the set input of the counter (45) controlled by the enabling circuit (29), a synchronising circuit (E) being provided which is controlled by a switch (S) and the measurement oscillator (5) signals and which connects the clock oscillator (43) through to the counter (44) of the calibration circuit for a certain time and reads its counter reading into the memory (46) after said time.

16. Apparatus according to one of Claims 1 to 4, characterised in that the coupling impedance (4) is connected, via a defined impedance (18), to an oscillator (16) which supplies a constant frequency and the input circuit of the evaluation circuit (21) has a defined impedance (19) which is preferably connected in parallel with the coupling impedance and measurement impedance, which evaluation circuit is essentially formed by a measurement rectifier (23) which optionally has a bandpass filter (22) upstream of it.

Fig.1

Fig.2

Fig.3

Fig. 4

LSB

MSB

DAC

DAC

A>B

A

B

programmierbares
Teilerverhältnis

Ref

Fig. 5

Anzeige zur
Funktionsüberwachung

Spannungsausgang

EP 0 412 974 B1

Fig. 6

Fig.7

Fig.8

Fig.9

3

64

63

60